# EUROPÄISCHE PATENTANMELDUNG

(11) **EP 1 006 368 A2**
(43) Veröffentlichungstag der Anmeldung: **07.06.2000**
(21) Anmeldenummer: 99119450.7
(22) Anmeldetag: 30.09.1999
(51) Int. Cl.: G01S 7/481

(54) **Opto-elektronischer Sensor und Verfahren zu dessen Herstellung**

(30) Priorität: 30.11.1998 DE 19855220
(71) Anmelder: Sick AG, 79183 Waldkirch, Breisgau (DE)
(72) Erfinder: Füger, Bernhard, 77654 Offenburg (DE)
(74) Vertreter: Manitz, Finsterwald & Partner

(57) **Zusammenfassung**

Die Erfindung betrifft einen opto-elektronischen Sensor mit in einem Gehäuse angeordneten optischen und elektronischen Bauteilen sowie ein Verfahren zur Herstellung solcher Sensoren, bei dem sowohl das Gehäuse als auch die optischen Bauteile aus einer einheitlichen Kunststoffmasse gebildet sind, welche die elektronischen Bauteile einbettend umschließt.

## Beschreibung

Die Erfindung betrifft einen opto-elektronischen Sensor mit in einem Gehäuse angeordneten optischen und elektronischen Bauteilen sowie ein Verfahren zur Herstellung eines solchen Sensors.

Es ist bekannt, die optischen und elektronischen Bauteile der genannten Sensoren in einem Gehäuse anzuordnen und zu fixieren und das Gehäuse anschließend mittels eines Deckels zu verschließen. Weiterhin ist es bekannt, die elektronischen und optischen Bauteile beispielsweise auf einer Platine anzuordnen und diese Platine dann gemeinsam mit den optischen und elektronischen Bauteilen mit Kunststoffmasse zu umspritzen, wobei die Kunststoffmasse in diesem Fall das Gehäuse bildet.

Die Herstellung derartiger, bekannter Sensoren ist auf nachteilige Weise mit hohem Aufwand verbunden, da Elektronik und Optik in Form von separaten Bauteilen positioniert und justiert werden müssen und das Gehäuse - sowohl als mittels eines Deckels verschließbares Element als auch als Kunststoffmasse - ein weiteres separates Bauteil bildet.

Eine Aufgabe der vorliegenden Erfindung besteht darin, die Herstellungskosten von Sensoren der eingangs genannten Art zu reduzieren, insbesondere durch Verringerung der Anzahl der miteinander zu verbindenden Bauteile.

Diese Aufgabe wird durch einen erfindungsgemäßen Sensor dadurch gelöst, daß sowohl das Gehäuse als auch die optischen Bauteile aus einer einheitlichen Kunststoffmasse gebildet sind, welche die elektronischen Bauteile einbettend umschließt.

Gemäß einem erfindungsgemäßen Verfahren wird die genannte Aufgabe dadurch gelöst, daß sowohl das Gehäuse als auch die optischen Bauteile durch einen einzigen, gemeinsamen Spritz- oder Gießvorgang aus einer einheitlichen Kunststoffmasse gefertigt werden, wobei die elektronischen Bauteile mittels des Spritz- oder Gießvorgangs in der Kunststoffmasse eingebettet werden.

Erfindungsgemäß bestehen also sowohl die elektronischen Bauteile als auch das Gehäuse aus dem gleichen Kunststoffmaterial, wobei diesem Kunststoffmaterial sowohl hinsichtlich der optischen Bauteile als auch hinsichtlich des Gehäuses seine endgültige Form mittels eines einzigen, gemeinsamen Spritz- oder Gießvorgangs verliehen wird.

Zur Herstellung eines erfindungsgemäßen Sensors ist es folglich nur noch nötig, die elektronischen Bauteile in einem Spritz- bzw. Gießwerkzeug zu positionieren, woraufhin der Spritz- oder Gießvorgang erfolgt, durch den die optischen Bauteile und das Gehäuse gebildet und mit den elektronischen Bauteilen verbunden werden. Das Herstellungsverfahren ist somit auf einen Positioniervorgang der elektronischen Bauteile in einer Spritz- bzw. Gießform und einen nachfolgenden Spritz- bzw. Gießvorgang reduziert, wodurch sich die Herstellungskosten von Sensoren der eingangs genannten Art erheblich verringern lassen.

Zusätzlich zu der genannten Verringerung der Herstellungskosten ergeben sich erfindungsgemäß noch eine Reihe von weiteren Vorteilen:
- Zur Herstellung von flüssigkeits- oder gasdichten Sensoren ist es nicht mehr nötig, die optischen Bauteile gegenüber dem Gehäuse abzudichten, da diese optischen Bauteile und das Gehäuse einstückig aus einer einheitlichen Kunststoffmasse geformt sind.
- Zwischen einem Lichtsender bzw. einem Lichtempfänger und dem Gehäuse ist ein besonders guter Wärmeübergang gegeben, da die Kunststoffmasse zum einen direkt am Lichtsender bzw. Lichtempfänger und zum anderen direkt am Gehäuse anliegen kann, so daß die Kunststoffmasse Wärme von Lichtsender bzw. Lichtempfänger zur Gehäuseoberfläche leiten kann, ohne daß zwischen den genannten Bauteilen störende Luftspalte vorhanden wären.
- Positionierungs- und Justierungsungenauigkeiten zwischen optischen Bauteilen und Gehäuse werden ausgeschlossen, da die Relativposition von optischen Bauteilen und Gehäuse durch die Gestalt des Spritz- bzw. Gießwerkzeugs fest und unveränderlich vorgegeben ist.

Die für Gehäuse und optische Bauteile verwendete Kunststoffmasse ist vorzugsweise zumindest teilweise durchlässig für sichtbares Licht, UV-Strahlung oder Infrarotstrahlung, je nach Typ des jeweils herzustellenden Sensors. Die genannte Eigenschaft der Kunststoffmasse ermöglicht es, dieser die für die Realisierung der optischen Bauteile nötigen abbildenden Eigenschaften zu verleihen. Zudem kann die Kunststoffmasse beispielsweise als optisches Filter ausgebildet werden, so daß sie letztlich eine Dreifachfunktion als Linse, Filter und Gehäuse erfüllen kann.

Von Vorteil ist es, wenn die elektronischen Bauelemente mit einem Kabel, einem Stecker und/oder einer Buchse gekoppelt sind, wobei Kabel, Stecker und/oder Buchse zumindest teilweise in der Kunststoffmasse eingebettet sind. Auf diese Weise ergibt sich beim Spritz- bzw. Gießvorgang automatisch eine Fixierung von Kabel, Stecker und/oder Buchse, wenn diese zuvor in das Spritz- bzw. Gießwerkzeug eingelegt wurden. Beim Einbetten eines Kabels ist es dabei von Vorteil, daß sich automatisch eine Zugentlastung ergibt.

Das erfindungsgemäße Verfahren wird bevorzugt derart durchgeführt, daß die elektronischen Bauteile vor dem Spritz- bzw. Gießvorgang auf einer Platine angeordnet und die Platine anschließend positionsgenau in ein Spritz- bzw. Gießwerkzeug eingelegt wird, woraufhin dann der Spritz- bzw. Gießvorgang erfolgen kann. Die Positionierung der Platine im Spritz- bzw. Gießwerkzeug kann auf vorteilhafte Weise durch in der Platine vorgesehene Positionierungsbohrungen und damit zusammenwirkende Positionierungszapfen im Spritz- bzw. Gießwerkzeug vereinfacht werden.

Von besonderem Vorteil ist es, wenn zur gleichzeitigen Herstellung einer Mehrzahl von Sensoren mehrere, miteinander verbundene, jeweils einem Sensor zugeordnete Platinen in einem einzigen Verfahrensschritt mit Kunststoffmasse umspritzt oder umgossen werden. Das Spritz- bzw. Gießwerkzeug muß in diesem Fall dann eine entsprechende Anzahl von Kavitäten zur Herstellung der Sensoren aufweisen.

Im Anschluß an die genannte gleichzeitige Herstellung mehrerer Sensoren können diese Sensoren entweder außerhalb des Spritz- oder Gießwerkzeugs oder innerhalb dieses Werkzeugs vereinzelt werden, wobei im letztgenannten Fall die Vereinzelung bevorzugt mittels eines Stanzvorgangs erfolgt.

Weitere bevorzugte Ausführungsformen sind in den Unteransprüchen angegeben.

Die Erfindung wird nachfolgend anhand von Beispielen unter Bezugnahme auf die Zeichnungen beschrieben; diese zeigen:
- Fig. 1: einen Schnitt durch einen erfindungsgemäßen Sensor und
- Fig. 2a-c: drei Verfahrensschritte bei der gleichzeitigen Herstellung mehrerer Sensoren.

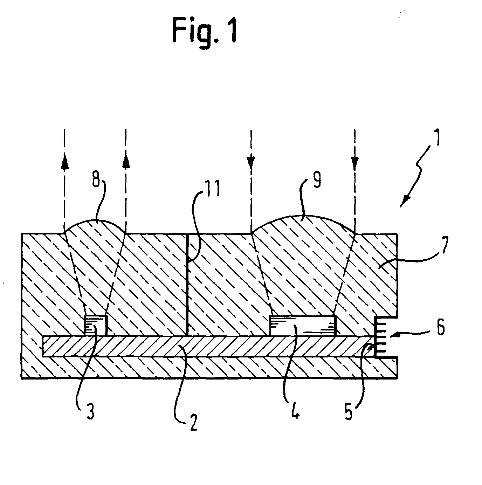

Fig. 1 zeigt einen Sensor 1 mit einer flächigen, sich senkrecht zur Zeichenebene erstreckenden Platine 2, auf der elektronische Bauelemente angeordnet sind. Von diesen elektronischen Bauelementen sind in Fig. 1 aus Gründen der Übersichtlichkeit lediglich ein Lichtsender 3 sowie ein Lichtempfänger 4 gezeichnet. Weitere elektronische Bauteile finden sich ebenfalls auf der Platine 2, sind jedoch in Fig. 1 nicht dargestellt.

Zwischen Lichtsender 3 und Lichtempfänger 4 erstreckt sich senkrecht zur Platine 2 eine optisch undurchlässige Trennplatte 11, welche Lichtsender 3 und Lichtempfänger 4 optisch voneinander entkoppelt.

An einer Schmalseite 5 der Platine 2 ist eine Buchse 6 vorgesehen, über welche der Sensor 1 mit Versorgungs-, Steuer- und/oder Datenleitungen koppelbar ist. Alternativ könnte die Buchse 6 beispielsweise auch an der Unterseite der Platine 2 vorgesehen sein.

Platine 2, Lichtsender 3, Lichtempfänger 4, Buchse 6 und Trennplatte 11 sind mit einer lichtdurchlässigen Kunststoffmasse 7 umspritzt, wobei diese Kunststoffmasse 7 sowohl das Gehäuse des Sensors 1 als auch die oberhalb des Lichtsenders 3 angeordnete Sendeoptik 8 und die oberhalb des Lichtempfängers 4 angeordnete Empfangsoptik 9 bildet.

Aus der Darstellung gemäß Fig. 1 wird deutlich, daß die Kunststoffmasse 7 unmittelbar an Lichtsender 3 und Lichtempfänger 4 anschließt, woraus sich die vorstehend erläuterten Vorteile ergeben.

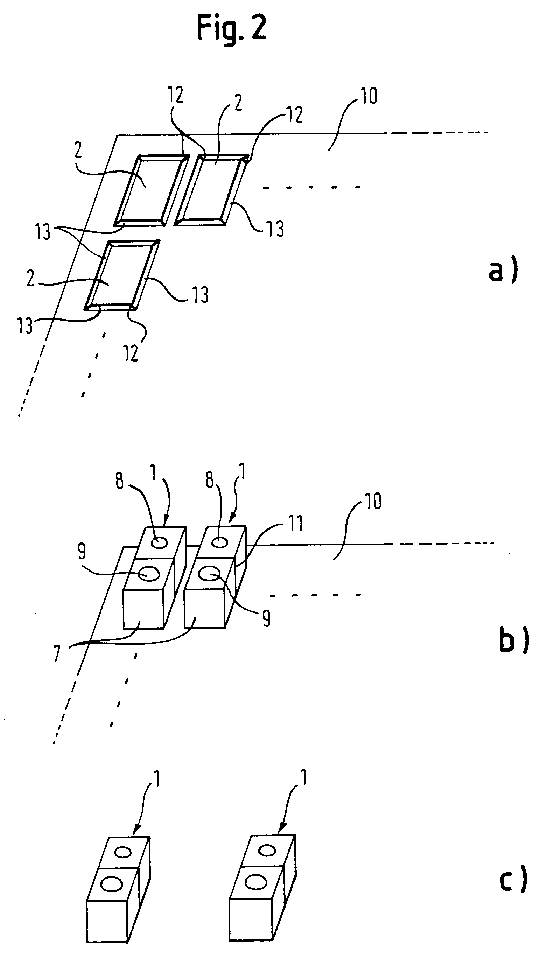

Fig. 2a zeigt ein - oftmals als "Nutzen" bezeichnetes - flächiges Element 10, welches eine Vielzahl von Platinen 2 umfaßt. In Fig. 2a sind beispielhaft lediglich drei Platinen 2 gezeichnet. Jede Platine 2 trägt alle elektronischen Bauteile, die zur Realisierung eines einzelnen Sensors nötig sind.

Die einzelnen Platinen 2 sind im flächigen Element 10 über dünne Stege 12 gehalten, so daß zwischen dem flächigen Element 10 und den Platinen 2 ein Luftspalt 13 ausgebildet ist, welcher sich bis auf geringfügige Unterbrechungen durch die Stege 12 fast über den vollständigen Umfang der jeweiligen Platinen 2 erstreckt. Dieser Luftspalt 13 macht ein fast vollständiges Umspritzen bzw. Umgießen der Platinen 2 möglich.

Die Platinen 2 sind somit über die Stege 12 und das Element 10 miteinander innerhalb einer gemeinsamen Ebene verbunden und relativ zueinander unveränderlich justiert.

Zur gleichzeitigen Herstellung mehrerer erfindungsgemäßer Sensoren wird das Element 10 in ein das gesamte Element 10 umschließendes Spritz- bzw. Gießwerkzeug eingelegt, wobei letzteres eine Anzahl von Kavitäten aufweist, die der Anzahl der herzustellenden Sensoren entspricht. Jede Kavität besitzt die Negativform eines herzustellenden Sensors einschließlich der Negativform der zu bildenden optischen Bauteile.

Durch einen einzigen Spritzvorgang werden sämtliche Platinen 2 des Elements 10 mit Kunststoffmasse umspritzt bzw. umgossen, wodurch die Gehäuse und optischen Bauelemente aller herzustellenden Sensoren gleichzeitig geschaffen werden.

Bevorzugt ist es, wenn ein etwaiger, nach dem Spritz- bzw. Gießvorgang auftretender Schwund der Kunststoffmasse bereits bei Anfertigung der Spritz- bzw. Gießwerkzeuge berücksichtigt wird, so daß die Sensoren und insbesondere deren optischen Bauteile letztlich die jeweils gewünschten Abmessungen aufweisen.

Nach dem Spritz- bzw. Gießvorgang ist auf dem Element 10 die gewünschte Anzahl von Sensoren 1 vorhanden, deren Gehäuse, Sendeoptiken 8 und Empfangsoptiken 9 aus Kunststoffmasse 7 gebildet sind.

Im Anschluß an den Spritz- bzw. Gießvorgang können die einzelnen Sensoren 1 mittels eines geeigneten Arbeitsschritts voneinander vereinzelt werden, wie dies in Fig. 2c dargestellt ist.

### Bezugszeichenliste

- 1: Sensor
- 2: Platine
- 3: Lichtsender
- 4: Lichtempfänger
- 5: Platinenschmalseite
- 6: Buchse
- 7: Kunststoffmasse
- 8: Sendeoptik
- 9: Empfangsoptik
- 10: Flächenelement
- 11: Trennplatte
- 12: Stege
- 13: Luftspalte

## Patentansprüche

1. Opto-elektronischer Sensor (1) mit in einem Gehäuse angeordneten optischen und elektronischen Bauteilen (3, 4, 8, 9),
**dadurch gekennzeichnet,**
daß sowohl das Gehäuse als auch die optischen Bauteile (8, 9) aus einer einheitlichen Kunststoffmasse (7) gebildet sind, welche die elektronischen Bauteile (3, 4) einbettend umschließt.

2. Sensor nach Anspruch 1,
**dadurch gekennzeichnet,**
daß die Kunststoffmasse (7) für sichtbares Licht, UV-Strahlung oder Infrarotstrahlung zumindest teilweise durchlässig und insbesondere als optisches Filter ausgebildet ist.

3. Sensor nach einem der vorhergehenden Ansprüche,
**dadurch gekennzeichnet,**
daß das Gehäuse und die optischen Bauteile (8, 9) durch einen einzigen, gemeinsamen Spritz- oder Gießvorgang gebildet sind.

4. Sensor nach einem der vorhergehenden Ansprüche,
**dadurch gekennzeichnet,**
daß die Kunststoffmasse (7) unmittelbar, ohne Ausbildung eines Luftspalts an einen Lichtsender (3) und/oder einen Lichtempfänger (4) angrenzt.

5. Sensor nach einem der vorhergehenden Ansprüche,
**dadurch gekennzeichnet,**
daß die elektronischen Bauteile (3, 4) mit einem Kabel, einem Stecker und/oder einer Buchse (6) gekoppelt sind.

6. Sensor nach Anspruch 5,
**dadurch gekennzeichnet,**
daß Kabel, Stecker und/oder Buchse (6) zumindest teilweise in der Kunststoffmasse (7) eingebettet sind.

7. Verfahren zur Herstellung eines opto-elektronischen Sensors (1) mit in einem Gehäuse angeordneten optischen und elektronischen Bauteilen (3, 4, 8, 9),
**dadurch gekennzeichnet,**
daß sowohl das Gehäuse als auch die optischen Bauteile (8, 9) durch einen einzigen, gemeinsamen Spritz- oder Gießvorgang aus einer einheitlichen Kunststoffmasse (7) gefertigt werden, wobei die elektronischen Bauteile (3, 4) mittels des Spritz- oder Gießvorgangs in der Kunststoffmasse (7) eingebettet werden.

8. Verfahren nach Anspruch 7,
**dadurch gekennzeichnet,**
daß das Spritz- oder Gießwerkzeug unter anderem die Negativform der zu bildenden optischen Bauteile (8, 9) aufweist.

9. Verfahren nach einem der Ansprüche 7 oder 8,
**dadurch gekennzeichnet,**
daß die insbesondere auf einer Platine (2) angeordneten elektronischen Bauteile (3, 4) vor dem Spritz- oder Gießvorgang positionsgenau in einem Spritz- oder Gießwerkzeug angeordnet werden, woraufhin der Spritz- oder Gießvorgang erfolgt.

10. Verfahren nach einem der Ansprüche 7 bis 9,
**dadurch gekennzeichnet,**
daß zur gleichzeitigen Herstellung einer Mehrzahl von Sensoren (1) mehrere, miteinander verbundene, jeweils einem Sensor (1) zugeordnete Platinen (2) in einem einzigen Verfahrensschritt mit Kunststoffmasse (7) umspritzt oder umgossen werden.

11. Verfahren nach Anspruch 10,
**dadurch gekennzeichnet,**
daß die Sensoren (1) im Spritz- oder Gießwerkzeug insbesondere mittels eines Stanzvorgangs vereinzelt werden.

12. Verfahren nach Anspruch 10,
**dadurch gekennzeichnet,**
daß die Sensoren (1) außerhalb des Spritz- oder Gießwerkzeugs vereinzelt werden.
